# EUROPÄISCHE PATENTANMELDUNG

(11) **EP 3 745 008 A1**
(43) Veröffentlichungstag der Anmeldung: **02.12.2020**
(21) Anmeldenummer: 20175587.3
(22) Anmeldetag: 20.05.2020
(51) Int. Cl.: F16K 27/04, F16K 27/02, F16K 11/07, F16K 1/00

(54) **2/2- ODER 3/3-WEGE-EINBAUVENTIL UND VERFAHREN ZU DESSEN FERTIGUNG**

(30) Priorität: 29.05.2019 DE 102019207949; 26.03.2020 DE 102020203953
(71) Anmelder: Robert Bosch GmbH, 70442 Stuttgart (DE)
(72) Erfinder: Vornwald, Sebastian, 97072 Wuerzburg (DE); Stroka, Alexander, 97846 Partenstein (DE); Schreier, Tobias, 97846 Partenstein (DE); Semrau, Stefan, 97816 Lohr Am Main (DE); Schnackig, Johannes, 97776 Eussenheim (DE); Feser, Hubert, 97737 Gemuenden (DE); Neuf, Udo, 97846 Partenstein (DE); Zeh, Werner, 97904 Dorfprozelten (DE)

(57) **Zusammenfassung**

Offenbart ist ein 2/2-Wege- oder 3/3-Wege-Einbauventil mit einer Buchse (8, 108) , die als Druckmitteldurchlass am Umfang verteilte Löcher aufweist. Über die Löcher und einen Innenraum der Buchse ist mindestens ein Ringkanal (14) am Außenumfang der Buchse mit einem Anschluss an einer Stirnseite der Buchse verbindbar. Die Löcher sind durch einen verschiebbaren Schließkörper (16, 116) verschließbar. Zur Minimierung des Durchflusswiderstandes sind die Löcher gegenüber dem Stand der Technik in Umfangsrichtung vergrößert und als Langlöcher (20) ausgebildet.

## Beschreibung

Die Erfindung betrifft 2/2- und 3/3-Wege-Einbauventile gemäß dem Oberbegriff des Patentanspruchs 1 und ein Verfahren zu deren Fertigung.

In den Datenblättern RD 21010 (Ausgabe 2017-05), RD 21040/ 2017-05 und RD 21 050/ 2003-02 der Anmelderin sind 2/2-Wege-Einbauventile offenbart, die eine Buchse haben, die in eine Einbaubohrung eines Ventilgehäuses eingesetzt wird. Dabei wird zwischen der Buchse in der Einbaubohrung ein Ringkanal gebildet. In dem Ventilgehäuse ist ein Kanal radial zu der Buchse angeordnet, der in den Ringkanal mündet. Im Bereich dieses Ringkanals sind in der Buchse vier oder mehr kreisrunde Löcher bzw. Durchgangsausnehmungen vorgesehen und durch Stege voneinander getrennt. Im Innern der Buchse ist ein beweglicher Schließkörper aufgenommen. Wenn dieser weg von den Durchgangsausnehmungen bewegt bzw. geschoben wird, werden die Durchgangsausnehmungen geöffnet und es wird eine Druckmittelverbindung zwischen dem Ringkanal und einer stirnseitigen Öffnung der Buchse aufgesteuert.

Nachteilig an derartigen 2/2-Wege-Einbauventilen ist deren Durchflusswiderstand, der sich durch die vergleichsweise kleinen Durchgangsausnehmungen und insbesondere durch die Stege ergibt, die zwischen den Durchgangsausnehmungen angeordnet sind.

Dem gegenüber liegt der Erfindung die Aufgabe zu Grunde, ein 2/2- und ein 3/3-Wege-Einbauventil mit einer Buchse und darin eingebrachten Durchgangsausnehmungen zu schaffen, wobei der Durchflusswiderstand des Einbauventils reduziert ist.

Diese Aufgabe wird gelöst durch ein 2/2-Wege-Einbauventil bzw. durch ein 3/3-Wege-Einbauventil mit den Merkmalen des Patentanspruchs 1 und durch ein Verfahren zu deren Fertigung mit den Merkmalen des Patentanspruchs 14.

Weitere vorteilhafte Ausgestaltungen der Erfindung sind in den abhängigen Patentansprüchen beschrieben.

Die beanspruchten 2/2- und 3/3-Wege-Einbauventile haben eine Buchse, in der ein Schließkörper geführt ist. In Umfangsrichtung der Buchse sind, vorzugsweise auf einer Kreisbahn, Durchgangsausnehmungen angeordnet. Erfindungsgemäß sind die Durchgangsausnehmungen Langlöcher, die in der Umfangsrichtung der Buchse größer (also länger) sind, als in einer axialen Richtung der Buchse. Dadurch ist eine radiale Öffnungsfläche der Durchgangsausnehmungen maximiert. Dadurch ist der Durchflusswiderstand der Durchgangsausnehmungen und somit des Einbauventils verringert.

Bei einem Ausführungsbeispiel handelt es sich um ein 3/3-Wege-Einbauventil, dessen Schließkörper ein Steuerschieber ist. Dann ist die Buchse mit einer zweiten Gruppe von Durchgangsausnehmungen versehen, die axial beabstandet zu den erstgenannten Durchgangsausnehmungen sind. Die Durchgangsausnehmungen der zweiten Gruppe sind ebenfalls vorzugsweise auf einer Kreisbahn in Umfangsrichtung der Buchse verteilt angeordnet. Dann sind erfindungsgemäß auch die Durchgangsausnehmungen der zweiten Gruppe Langlöcher, die in der Umfangsrichtung der Buchse größer sind, als in der axialen Richtung der Buchse. Dadurch ist auch bei den Durchgangsausnehmungen der zweiten Gruppe eine radiale Öffnungsfläche maximiert. Dadurch ist der Durchflusswiderstand der Durchgangsausnehmungen der zweiten Gruppe und somit des Einbauventils auch bei Durchströmung der zweiten Gruppe von Langlöchern verringert.

Bei einer Weiterbildung des 3/3-Wege-Einbauventils sind am Steuerschieber verteilt eine erste Gruppe von Steuerausnehmungen und axial dazu beabstandet eine zweite Gruppe von Steuerausnehmungen angeordnet, die zumindest abschnittsweise in Überdeckung mit den Langlöchern der Buchse bringbar sind. Die Steuerausnehmungen sind besonders bevorzugt ebenfalls Langlöcher, die in der Umfangsrichtung des Steuerschiebers größer sind, als in einer axialen Richtung des Steuerschiebers. Dadurch ist der Durchflusswiderstand der Durchgangsausnehmungen der zweiten Gruppe und somit des Einbauventils auch bei Durchströmung der zweiten Gruppe von Langlöchern verringert.

Üblicher Weise verbleiben zwischen den Langlöchern Stege, die gemäß einer Weiterbildung der Erfindung gegenüber einem vollumfänglich geschlossenen Führungsbereich der Buchse in radialer Richtung verstärkt sind. Der Führungsbereich umfasst den Schließkörper. Die radiale Verstärkung ist durch eine Vergrößerung der radialen Materialstärke der Stege nach außen in Richtung zu einem Ringkanal gebildet. Damit kann eine eventuelle Schwächung der Stege durch die erfindungsgemäße Vergrößerung der Durchgangsausnehmungen kompensiert werden.

Bei einem bevorzugten Anwendungsfall der Erfindung ist das Einbauventil ein Sitzventil, wobei die Buchse am Innenumfang einen Ventilsitz für den Schließkörper aufweist. Dann ist vorteilhafter Weise zwischen dem Ventilsitz und einer stirnseitigen Öffnung der Buchse eine Verringerung des Innendurchmessers der Buchse vorgesehen. Die Verringerung des Innendurchmessers ist gegenüber dem vollumfänglichen Führungsbereich der Buchse zu verstehen, in dem der Schließkörper geführt ist. Damit ist eine Verdickung zu Erhöhung der Festigkeit gegenüber dem vollumfänglichen Führungsbereich erreicht.

Wenn sich die Stege in Umfangsrichtung betrachtet über höchstens 25%, besonders bevorzugt über höchstens 20% des Außenumfangs der Buchse erstrecken, ist ein Optimum aus einerseits Festigkeit der Buchse und andererseits verringertem Durchflusswiderstand erreicht.

Bei einem bevorzugten Anwendungsfall der Erfindung weist die Buchse an ihrem Außenumfang eine radiale Stufe auf, oder es ist eine weitere Buchse vorgesehen, die mit der Buchse eine radiale Stufe bildet. Durch die radiale Stufe ist ein Ringkanal stirnseitig begrenzbar bzw. im eingebauten Zustand begrenzt.

Der Ringkanal hat ebenfalls verringerten Durchflusswiderstand, wenn die Stufe eine größere radiale Erstreckung hat, als die Wandstärke des vollumfänglichen Führungsbereichs der Buchse, in dem der Schließkörper geführt ist.

Der Ringkanal hat einen besonders verringerten Durchflusswiderstand, wenn die Stufe eine größere radiale Erstreckung hat, als die radiale Erstreckung (Dicke) der verstärkten Stege.

Bei einem Ausführungsbeispiel des 2/2-Wegeventils sind zwei Langlöcher vorgesehen, und bei einem anderen Ausführungsbeispiel sind drei Langlöcher vorgesehen. An der Buchse des 3/3-Wegeventils können zwei Gruppen zu je zwei oder drei am Umfang verteilten Langlöchern vorgesehen sein. Damit ist gegenüber dem Stand der Technik mit vier sechs oder sogar acht Durchgangsausnehmungen die Wahrscheinlichkeit verringert, dass einer der Stege genau gegenüber einem Zuströmkanal des Ventilblocks liegt, der von außen, vorzugsweise radial, in den Ringkanal mündet. Wenn das erfindungsgemäße Einbauventil in den Ventilblock eingesetzt ist, befindet sich im ungünstigeren Fall lediglich einer der Stege gegenüber dem Zuströmkanal, der darüber hinaus auch mit gegenüber dem Stand der Technik verminderter Breite in Umfangsrichtung der Buchse ausgeführt ist. Weiterhin ist die Wahrscheinlichkeit erhöht, dass sich kein Steg gegenüber dem Zuströmkanal befindet, sondern dass sich eines der Langlöcher gegenüber dem Zuströmkanal befindet. Damit ist in allen Fällen der Strömungswiderstand vom Zuströmkanal radial durch den Ringkanal hindurch in eines oder maximal zwei der Langlöcher hinein verringert.

Es wird besonders bevorzugt, wenn die Langlöcher und oder die Steuerausnehmungen jeder Gruppe gleichmäßig in Umfangsrichtung der Buchse bzw. des Steuerschiebers verteilt sind.

An der Stirnseite der Buchse oder der weiteren Buchse kann zumindest eine Markierung angebracht sein, welche die optimale Ausrichtung der Buchse vereinfacht. Vorzugsweise wird die Markierung als Rille in der Buchse direkt mittig oberhalb des Langlochs ausgeführt.

Das erfindungsgemäße Verfahren dient zum einfachen Fertigen der Langlöcher der Buchse des vorbeschriebenen Einbauventils und hat die Schritte:
- vorzugsweise radiales Ansetzen und Einführen eines Bohrers oder Fräskopfes und
- Drehen der Buchse um ihre Längsachse, bis die gewünschte Länge des betroffenen Langlochs erreicht ist.

Zwei Ausführungsbeispiele des erfindungsgemäßen Einbauventils sind in den Figuren dargestellt.

Es zeigen
Figur 1 in einem Längsschnitt das erfindungsgemäße 2/2-Wege-Einbauventil gemäß einem Ausführungsbeispiel in einem Ventilblock,
Figur 2 in einem Querschnitt das erfindungsgemäße 2/2-Wege-Einbauventil aus Figur 1 in dem Ventilblock,
Figur 3 in einer perspektivischen Darstellung das erfindungsgemäße 2/2-Wege-Einbauventil aus den Figuren 1 und 2,
Figur 4 eine Buchse des erfindungsgemäßen 2/2-Wege-Einbauventil aus den vorhergehenden Figuren,
Figur 5 einem Längsschnitt das erfindungsgemäße 3/3-Wege-Einbauventil gemäß einem Ausführungsbeispiel, und
Figur 6 in einer perspektivischen Darstellung das erfindungsgemäße 3/3-Wege-Einbauventil aus den Figur 5.

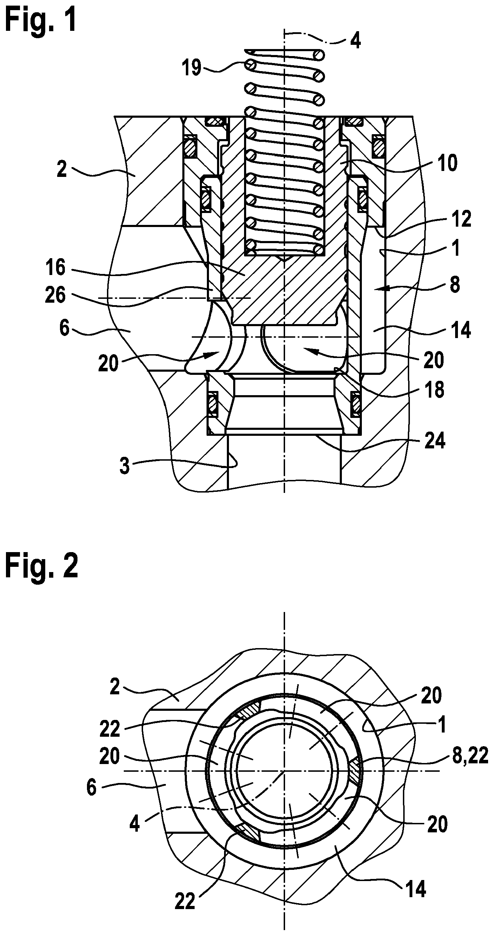

Figur 1 zeigt in einem Längsschnitt das erfindungsgemäße 2/2-Wege-Einbauventil, das als Cardridge-Ventil ausgebildet ist, und das in eine entsprechende Ausnehmung 1 eines Ventilblocks 2 eingesetzt ist. Dabei erstrecken sich die Ausnehmung 1 und das Einbauventil und ein Abströmkanal 3 des Ventilblocks 2 entlang einer gemeinsamen Längsachse 4. Rechtwinklig zur Längsachse 4 ist ein Zuströmkanal 6 im Ventilblock 2 ausgebildet.

Das Einbauventil kann beidseitig durchströmt werden, d.h. Zuström- und Abströmkanal können auch gegenüber dem beschriebenen Ausführungsbeispiel getauscht sein.

Das Einbauventil hat eine innere Buchse 8 und eine weitere Buchse 10, die aneinander befestigt sind. Da die weitere Buchse 10 einen größeren Außendurchmesser als die innere Buchse 8 hat, entsteht außen am Einbauventil eine radiale Stufe 12. Die radiale Stufe 12 begrenzt einen Ringraum oder Ringkanal 14 stirnseitig, der weiterhin zwischen einem Außenmantel der Buchse 8 und der Ausnehmung 1 des Ventilblocks 2 gebildet ist. Der Zuströmkanal 6 mündet in den Ringkanal 14.

Im Inneren der Buchse 8 ist ein Schließkörper 16 entlang der Längsachse 4 geführt. Wenn der Schließkörper 16 aus seiner (in Figur 1 gezeigten) oberen Öffnungsposition (in Figur 1 nach unten) in einen am Innenumfang der Buchse 8 gebildeten Ventilsitz 18 z.B. mit der Kraft einer Feder 19 gespannt wird, verschließt er drei Langlöcher 20, von denen in Figur 1 nur zwei dargestellt sind.

Figur 2 zeigt in einem Querschnitt das Einbauventil aus Figur 1, genauer gesagt der Buchse 8 in dem Ventilblock 2. Es ist zu erkennen, dass am Umfang der Buchse 8 insgesamt drei Langlöcher 20 vorgesehen sind, die durch eine entsprechende Anzahl von Stegen 22 voneinander getrennt sind.

Beim gezeigten Ausführungsbeispiel nehmen die Stege 22 lediglich 20 - 25 % des Außenumfangs der Buchse 8 ein. Diese Betrachtung gilt für die in Figur 2 gezeigte Schnittebene, die (entlang der Längsachse 4 gemäß Figur 1 betrachtet) auf halber Höhe durch die Langlöcher 20 verläuft.

In der in Figur 1 gezeigten geöffneten Position des Schließkörpers 16 ist eine Druckmittelverbindung vom Zuströmkanal 6 durch den Ringkanal 14 durch die drei Langlöcher 20 durch den Ventilsitz 18 und durch eine stirnseitige Öffnung 24 der Buchse 8 und schließlich zum Abströmkanal 3 aufgesteuert.

Zwischen dem Ventilsitz 18 und der stirnseitigen Öffnung 24 ist eine Verringerung des Innendurchmessers der Buchse 8 vorgesehen.

Zwischen den Langlöchern 20 und dem der stirnseitigen Öffnung 24 gegenüberliegenden Endabschnitt der Buchse 8, an dem die weitere Buchse 10 befestigt ist, hat die Buchse 8 einen vollumfänglichen Führungsbereich 26, über den im Wesentlichen die Führung des Schließkörpers 16 entlang der Längsachse 4 realisiert ist.

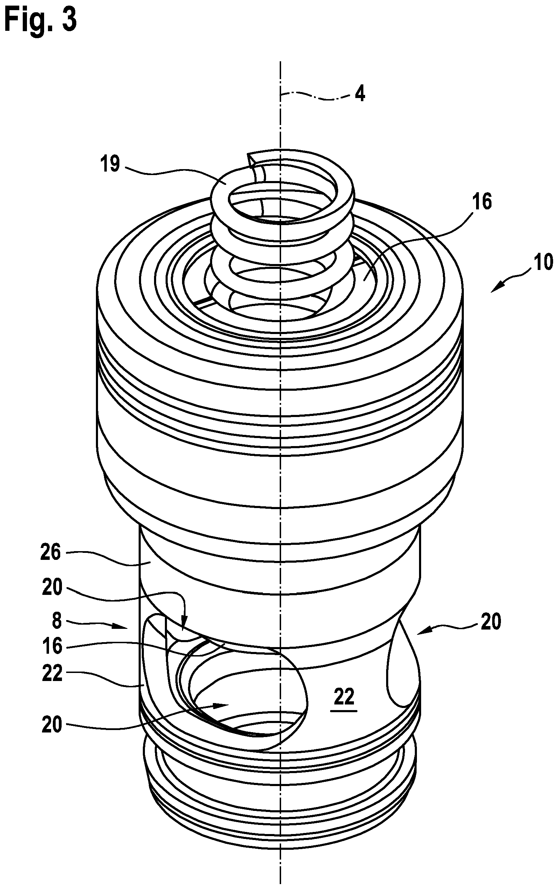

Figur 3 zeigt das Ausführungsbeispiel des erfindungsgemäßen 2/2-Wege-Einbauventils der beiden vorhergehenden Figuren isoliert ohne den Ventilblock 2 in einer perspektivischen Darstellung. Es ist insbesondere der Außenumfang der Buchse 8 dargestellt, der von dem (in Figur 3 nicht gezeigten) Ringkanal 14 umgeben wird. In Figur 3 ist über der Buchse 8 insbesondere die weitere Buchse 10 dargestellt, in deren Innenraum ein Endabschnitt des Schließkörpers 16 eingesetzt ist. In diesen Endabschnitt des Schließkörpers 16 ist wiederum die Feder 19 eingesetzt.

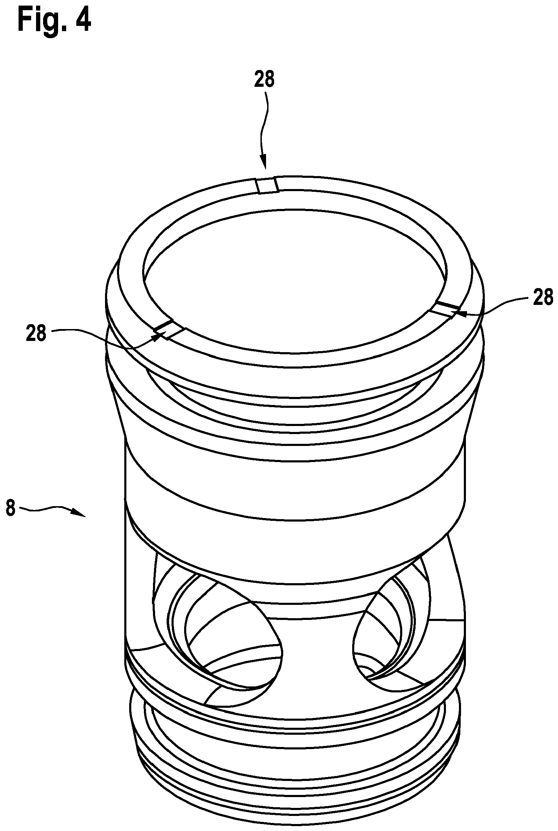

Figur 4 zeigt die Buchse 8 des Ausführungsbeispiels der vorhergehenden Figuren isoliert. An einer oberen Stirnseite der Buchse 8 sind drei Markierungen 28 in Rillenform eingebracht, die jeweils einem der drei Langlöcher 20 zugeordnet sind. Genauer gesagt ist jeweils mittig über jedem Langloch 20 eine Markierung 28 vorgesehen.

Beim Einbau des 2/2-Wege-Einbauventils kann dann eine der Markierungen 28 und damit eines der Langlöcher 20 der Buchse 8 optimal zum Zuströmkanal 6 ausgerichtet werden.

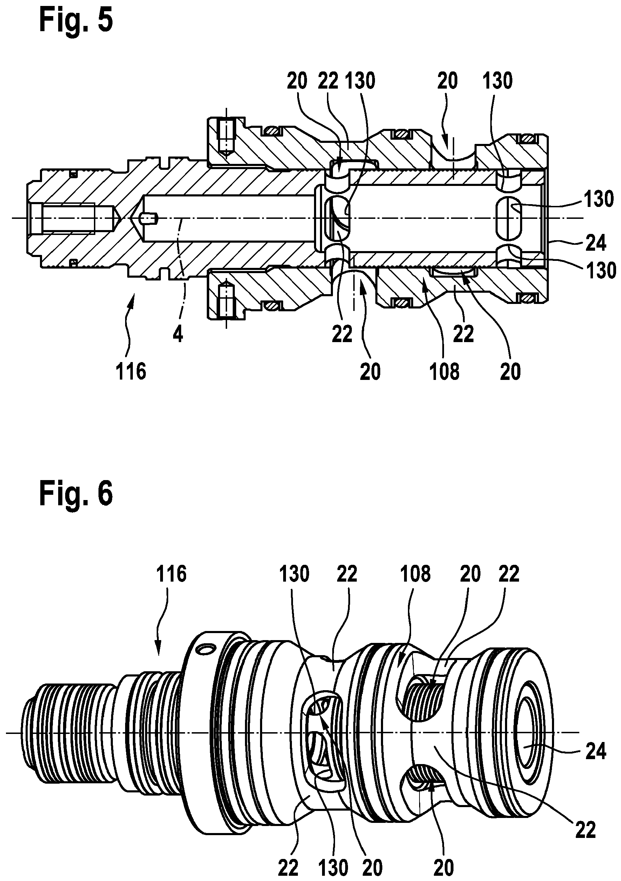

Figur 5 zeigt in einem Längsschnitt und Figur 6 in einer perspektivischen Ansicht das erfindungsgemäße 3/3-Wege-Einbauventil gemäß einem Ausführungsbeispiel. Es hat eine einstückige am Außenumfang gestufte Buchse 108 in Cartridge-Bauweise, die in eine entsprechende Ausnehmung eines Ventilblocks eingesetzt werden kann. Damit werden am Außenumfang der Buchse 108 zwei axial zueinander beabstandete und gegeneinander gedichtete Ringkanäle gebildet.

Im Inneren der Buchse 108 ist ein Steuerschieber 116 entlang der Längsachse 4 geführt.

Am Umfang der Buchse 108 sind zwei Gruppen zu jeweils drei gleichmäßig am Umfang verteilten Langlöchern 20 vorgesehen, die durch eine entsprechende Anzahl von Stegen 22 voneinander getrennt sind.

Es ist weiterhin zu erkennen, dass am Umfang des Steuerschiebers 116 zwei Gruppen zu jeweils vier gleichmäßig am Umfang verteilten Steuerausnehmungen 130 vorgesehen sind, die durch eine entsprechende Anzahl von Stegen voneinander getrennt sind.

In der in den Figuren 5 und 6 gezeigten Position des Steuerschiebers 116 ist eine Druckmittelverbindung vom ersten (in den Figuren linken) Ringkanal durch die drei Langlöcher 20 der ersten Gruppe des Buchse 108 durch die vier Steuerausnehmungen 130 der ersten Gruppe des Steuerschiebers 116 durch das Innere des Steuerschiebers 116 und durch eine stirnseitige Öffnung 24 der Buchse 8 vorhanden.

Ausgehend von der in den Figuren 5 und 6 gezeigten Position des Steuerschiebers 116 kann dieser nach links verschoben werden, womit eine Druckmittelverbindung vom zweiten (in den Figuren rechten) Ringkanal durch die drei Langlöcher 20 der zweiten Gruppe des Buchse 108 durch die vier Steuerausnehmungen 130 der zweiten Gruppe des Steuerschiebers 116 durch das Innere des Steuerschiebers 116 und durch die stirnseitige Öffnung 24 der Buchse 8 ermöglicht wird. Gleichzeitig wird die vorgenannte Druckmittelverbindung geschlossen.

Offenbart ist ein Einbauventil mit einer Buchse 8; 108, die als Druckmitteldurchlass am Umfang verteilte Löcher oder als Druckmitteldurchlässe zwei Gruppen von am Umfang verteilten Löchern aufweist. Über die Löcher und einen Innenraum der Buchse 8; 108 ist ein Ringkanal 14 am Außenumfang der Buchse 8 mit einem Anschluss 24 an einer Stirnseite der Buchse 8 verbindbar, oder es sind zwei Ringkanäle am Außenumfang der Buchse 108 mit dem Anschluss 24 an der Stirnseite der Buchse 8 verbindbar. Die Löcher sind durch einen verschiebbaren Schließkörper 16; 116 verschließbar. Zur Minimierung des Durchflusswiderstandes sind die Löcher gegenüber dem Stand der Technik in Umfangsrichtung vergrößert und als Langlöcher 20 ausgebildet.

## Patentansprüche

1. 2/2-Wege- oder 3/3-Wege-Einbauventil mit einer Buchse (8; 108), in der ein Schließkörper (16; 116) bewegbar ist, wobei in Umfangsrichtung der Buchse (8; 108) verteilt Durchgangsausnehmungen angeordnet sind, **dadurch gekennzeichnet, dass** die Durchgangsausnehmungen Langlöcher (20) sind, die in der Umfangsrichtung der Buchse (8; 108) größer sind, als in einer axialen Richtung der Buchse (8; 108).

2. 3/3-Wege-Einbauventil nach Anspruch 1, wobei der Schließkörper (116) ein Steuerschieber ist, und wobei in Umfangsrichtung der Buchse (108) verteilt weitere Durchgangsausnehmungen angeordnet sind, die axial beabstandet zu den erstgenannten Durchgangsausnehmungen sind, **dadurch gekennzeichnet, dass** auch die weiteren Durchgangsausnehmungen Langlöcher (20) sind, die in der Umfangsrichtung der Buchse (108) größer sind, als in einer axialen Richtung der Buchse (108).

3. 3/3-Wege-Einbauventil nach Anspruch 2, wobei am Steuerschieber verteilt Steuerausnehmungen (130) einer ersten Gruppe und axial dazu beabstandet weitere Steuerausnehmungen (130) einer zweiten Gruppe angeordnet sind, die zumindest abschnittsweise in Überdeckung mit den Langlöchern (20) der Buchse (108) bringbar sind, und die Langlöcher sind, die in der Umfangsrichtung des Steuerschiebers größer sind, als in einer axialen Richtung des Steuerschiebers.

4. 2/2-Wege- oder 3/3-Wege-Einbauventil nach einem der vorhergehenden Ansprüche, wobei zwischen den Langlöchern (20) Stege (22) angeordnet sind, **dadurch gekennzeichnet, dass** die Stege (22) in radialer Richtung verstärkt sind.

5. 2/2-Wege-Einbauventil nach Anspruch 1 oder 4, das ein Sitzventil ist, wobei die Buchse (8) am Innenumfang einen Ventilsitz (18) für den Schließkörper (16) aufweist.

6. 2/2-Wege-Einbauventil nach Anspruch 5, wobei zwischen dem Ventilsitz (18) und einer stirnseitigen Öffnung (24) der Buchse (8) eine Verringerung des Innendurchmessers der Buchse (8) vorgesehen ist.

7. 2/2-Wege- oder 3/3-Wege-Einbauventil nach einem der vorhergehenden Ansprüche, wobei sich die Langlöcher (20) in Umfangsrichtung betrachtet über mindestens 75% des Außenumfangs der Buchse (8; 108) erstrecken.

8. 2/2-Wege-Einbauventil nach einem der Ansprüche 1, 4, 5, 6 oder 7, wobei die Buchse (8) an ihrem Außenumfang eine radiale Stufe (12) aufweist, oder wobei eine weitere Buchse (10) vorgesehen ist, die mit der Buchse (8) eine radiale Stufe (12) bildet, wobei durch die radiale Stufe (12) ein Ringkanal (14) begrenzbar ist.

9. 2/2-Wege-Einbauventil nach Anspruch 8, wobei die Stufe (12) eine größere radiale Erstreckung hat, als die Wandstärke eines vollumfänglichen Führungsbereichs (26) der Buchse (8), in dem der Schließkörper (16) geführt ist, und/oder wobei die Stufe (12) eine größere radiale Erstreckung hat, als die Wandstärke der Buchse (8) im Bereich der Langlöcher (20).

10. 2/2-Wege-Einbauventil nach den Ansprüchen 4 und 8, wobei die Stufe (12) eine größere radiale Erstreckung hat, als die radiale Erstreckung der verstärkten Stege (22).

11. 2/2-Wege-Einbauventil nach Anspruch 1 oder einem der Ansprüche 4 bis 10, wobei zwei oder drei Langlöcher (20) vorgesehen sind.

12. 3/3-Wege-Einbauventil nach einem der Ansprüche 1 bis 3, wobei an der Buchse (108) insgesamt sechs Langlöcher (20) vorgesehen sind.

13. 2/2-Wege- oder 3/3-Wege-Einbauventil nach einem der vorhergehenden Ansprüche, wobei an einer Stirnseite der Buchse (8; 108) für zumindest ein Langloch (20) eine Markierung (28) vorgesehen ist.

14. Verfahren zum Fertigen der Langlöcher der Buchse (8; 108) des 2/2-Wege- oder 3/3-Wege-Einbauventils nach einem der vorhergehenden Ansprüche **gekennzeichnet durch** die Schritte:
- Ansetzen und Einführen eines Bohrers oder Fräskopfes,
- Drehen der Buchse (8; 108) um ihre Längsachse (4).
